# EUROPÄISCHE PATENTSCHRIFT

(11) **EP 3 213 606 B1**
(45) Veröffentlichungstag und Bekanntmachung des Hinweises auf die Patenterteilung: **04.12.2019**
(21) Anmeldenummer: 15801666.7
(22) Anmeldetag: 23.10.2015
(51) Int. Cl.: H05B 37/02

(54) **VERFAHREN UND STEUERGERÄT ZUR ANSTEUERUNG FUER EIN BETRIEBSGERAET FUER LEUCHTMITTEL**
METHOD AND APPARATUS FOR CONTROLLING AN OPERATING DEVICE FOR LIGHTING MEANS
PROCÉDÉ ET APPAREIL DE COMMANDE POUR UN DISPOSITIF DE FONCTIONNEMENT DE MOYEN D'ÉCLAIRAGE

(30) Priorität: 30.10.2014 AT 3832014 U
(43) Veröffentlichungstag der Anmeldung: 06.09.2017
(73) Patentinhaber: Tridonic GmbH & Co. KG, 6851 Dornbirn (AT)
(72) Erfinder: HERTER, Jens, 88131 Lindau (DE); KEARS, John, Witton Gilbert Durham DH7 (GB)
(74) Vertreter: Rupp, Christian
(86) Internationale Anmeldenummer: PCT/AT2015/050268
(87) Internationale Veröffentlichungsnummer: WO 2016/065382

(56) Entgegenhaltungen:
- DE-A1-102005 028 206
- US-A1- 2013 289 750

## Beschreibung

Die Erfindung betrifft ein Verfahren zur Ansteuerung für mindestens ein Betriebsgerät für Leuchtmittel gemäß dem Oberbegriff des Patentanspruchs 1, ein Beleuchtungssystem mit einem Steuergerät sowie mindestens einem Betriebsgerät zum Betreiben von Leuchtmitteln gemäß dem Oberbegriff des Patentanspruchs 13, ein Steuergerät zum Betreiben von Leuchtmitteln, mit einer Schnittstellenschaltung zum Empfang von digitalen Steuerbefehlen über eine Busleitung gemäß dem Oberbegriff des Patentanspruchs 7.

### Technisches Gebiet

Derartige Verfahren werden zur Ansteuerung von Betriebsgeräten für Leuchtmittel genutzt und werden in Beleuchtungssystemen verwendet, um Leuchtmittel mit Hilfe einer zentralen Steuereinheit ein- und auszuschalten und in der Helligkeit einzustellen. Üblicherweise werden dabei die Leuchtmittel von Betriebsgeräten angesteuert. Die Betriebsgeräte werden in Gruppen zusammengefasst und können von einer oder auch mehreren zentralen Steuereinheiten gesteuert werden. Mit dem Begriff Leuchtmittel werden sowohl Gasentladungslampen als auch Halogenlampen oder Leuchtdioden (LED) bezeichnet. Ein derartiges Leuchtmittel kann einzeln oder gemeinsam mit weiteren Leuchtmitteln in einer Leuchte angeordnet sein, die auch das Betriebsgerät enthalten kann.

Bei modernen Beleuchtungssystemen werden oftmals durch die zentrale Steuereinheit analoge oder digitale Steuerbefehle an die Betriebsgeräte übersendet. Durch diese externen Steuerbefehle lassen sich insbesondere Helligkeitswerte vorgeben, um verschiedene Beleuchtungszustände zu erreichen.

Ein analoger Steuerbefehl kann beispielsweise eine in der Amplitude modulierbare Steuerspannung sein.

Die Betriebsgeräte können mit einer Adresse versehen sein, um eine einzelne oder auch gruppenweite Ansteuerung durch die zentrale Steuereinheit zu ermöglichen. US 2013/289750 A1 offenbart ein System dieser Art.

Ein weit verbreitetes Steuerungsverfahren ist die Ansteuerung von Beleuchtungssystemen gemäß DALI (Digital Addressable Lighting Interface) Standard. Dieser Standard definiert eine Schnittstelle und ein Übertragungsformat zur digitalen Ansteuerung von Betriebsgeräten, wobei für die einzelnen Betriebsgeräte Adressen vergeben werden können. Die Betriebsgeräte können über die externen Steuerbefehle ein- und ausgeschaltet oder in der Helligkeit gesteuert werden, zudem kann eine spezielle Betriebsbedingung wie ein Notbeleuchtungszustand initiiert werden und Fehlermeldungen abgefragt werden.

Der DALI Standard ist 16 Bit Manchester-Code, der eine maximale Dimmgeschwindigkeit bei einer Helligkeitsänderung von 1% bis 100% in knapp 0,7 Sekunden ermöglicht.
Der Hochpegel liegt im Bereich von ungefähr 16V, der niedrige Pegel bei einer Spannung von ungefähr 0 Volt.

### Darstellung der Erfindung

Es ist die Aufgabe der Erfindung, ein Verfahren bereitzustellen, welches die Ansteuerung von Betriebsgeräten durch eine Steuereinheit ohne die oben genannten Nachteile bzw. unter einer deutlichen Reduzierung dieser Nachteile ermöglicht.

Diese Aufgabe wird für ein Verfahren erfindungsgemäß durch die kennzeichnenden Merkmale des Patentanspruchs 1 und für eine gattungsgemäße Vorrichtung erfindungsgemäß durch die kennzeichnenden Merkmale der Patentansprüche 7 und 13 gelöst. Besonders vorteilhafte Ausführungen der Erfindung sind in den Unteransprüchen beschrieben.

Die erfindungsgemäße Lösung zur Steuerung von Betriebsgeräten beruht auf dem Gedanken, dass ein Steuergerät über einen analogen oder digitalen Lichtsteuerbus mit dem Betriebsgerät verbunden ist und zum Senden von analogen oder digitalen Steuerbefehlen über den Lichtsteuerbus ausgelegt ist, wobei das Steuergerät dazu ausgelegt ist, die Betriebsgeräte über Steuerbefehle in der Helligkeit und / oder Farbe zu steuern, wobei das Steuergerät weiterhin mit einem IPv6-Bussystem verbunden ist, das Steuergerät über das IPv6-Bussystem zum Empfang von IPv6-Busbefehlen ausgelegt ist und dazu ausgelegt ist, entsprechend der empfangenen IPv6-Busbefehle einen Farbbefehl oder einen Helligkeitsbefehl als Steuerbefehl an zumindest ein Betriebsgerät zu senden. Das Betriebsgerät ist dazu ausgelegt, die Ansteuerung des Leuchtmittels entsprechend des empfangenen Farbbefehls oder Helligkeitsbefehls anzupassen.

Auf diese Weise ist es möglich, bereits bestehende Betriebsgeräte mit einer Schnittstelleneinrichtung in ein Beleuchtungssystem einzubinden und gleichzeitig das Beleuchtungssystem an ein IPv6-Bussystem anzubinden. Es ist keine Anpassung der Schnittstellen der einzelnen Betriebsgeräte an das IPv6-Bussystem notwendig, sondern nur ein zentrales Steuergerät, welches die Anbindung an ein IPv6-Bussystem übernehmen kann.

Die Steuerbefehle können verschachtelt innerhalb von IPv6-Busbefehlen übertragen werden. Das Steuergerät kann die IPv6-Busbefehlen auswerten und die darin enthaltenen Steuerbefehle an Busleitung weiterleiten.

Ein Steuerbefehl ist gemäß der Erfindung nicht nur ein Einschaltbefehl, Ausschaltbefehl oder neuer Helligkeitswert, der an ein Betriebsgerät übertragen werden kann, sondern kann auch erweiterte Informationen enthalten. Insbesondere kann eine Farbinformation bzw. ein Farbbefehl, eine Adresse, eine Zustandsinformation oder ein Fehlersignal als Steuerbefehl übertragen werden.

Das Steuergerät ist zur Bereitstellung der Spannungsversorgung für den analogen oder digitalen Lichtsteuerbus 21, gespeist aus dem IPv6-Bussystem, ausgelegt sein.

Das Steuergerät kann zur Unterbrechung der Bereitstellung der Spannungsversorgung für den analogen oder digitalen Lichtsteuerbus ausgelegt sein.

Das Steuergerät trennt bei Erkennen des Abschaltens aller an die Busleitung angeschlossenen Betriebsgeräte diese Betriebsgeräte vom Netz. Die Erfindung bezieht sich auch auf eine Vorrichtung zum Empfangen von Steuerbefehlen durch ein Betriebsgerät von Leuchtmitteln. Das Betriebsgerät weist eine Treiberschaltung zum Betreiben des Leuchtmittels auf. Zum Empfang und zur Auswertung der Steuerbefehle weist das Betriebsgerät eine Schnittstellenschaltung auf.

Gemäß der empfangenen Steuerbefehle kann das Betriebsgerät über die Treiberschaltung den Betrieb, die Helligkeit und der Farbe des Leuchtmittels steuern.

Nachfolgend soll die Erfindung anhand der beigefügten Zeichnung näher erläutert werden. Es zeigen:

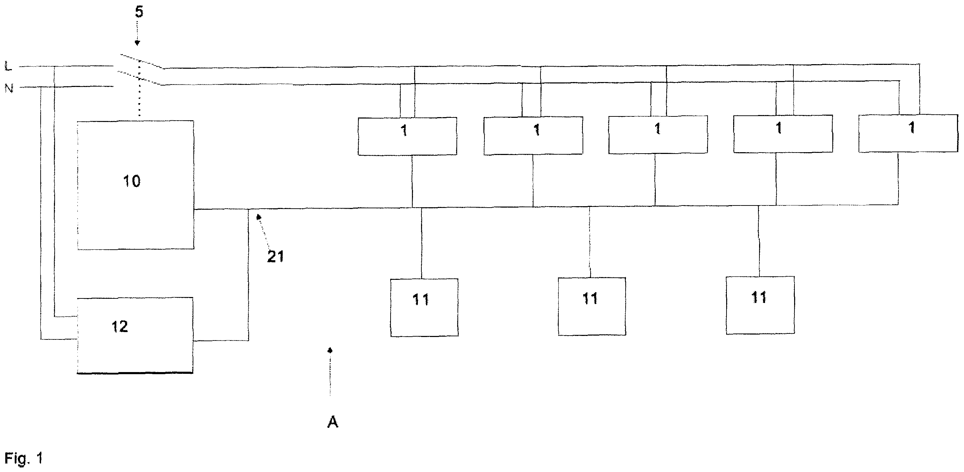

Fig. 1 schematisch die Ausgestaltung eines Beleuchtungssystems mit einem erfindungsgemäßen Steuergerät
Fig. 2 schematisch die Ausgestaltung eines Beleuchtungssystems mit einem erfindungsgemäßen Steuergerät

### Nachfolgend wird die Erfindung anhand eines

Ausführungsbeispiels eines Beleuchtungssystems mit einem erfindungsgemäßen Steuergerät, die über das Steuergerät mit Befehlen angesteuerten Betriebsgeräte und weitere Steuergeräte erläutert.

Die vorliegende Erfindung kann bei sämtlichen Arten von Betriebsgeräten für Leuchtmittel eingesetzt werden. Dabei ist die Anwendung von ganz verschiedenen Leuchtmitteln möglich, es können insbesondere Gasentladungslampen, Halogenlampen oder auch anorganische oder organische Leuchtdioden eingesetzt werden.

Das Betriebsgerät 1 und das Steuergerät 10 sind Bestandteil eines Beleuchtungssystems A.

Zusätzlich können weitere Steuergeräte 11 an die analoge oder digitale Busleitung 21 angeschlossen sein. Bei der Busleitung 21 kann es sich beispielsweise um einen analogen Bus wie beispielsweise um einen 1-10V Steuerbus oder um einen digitalen Steuerbus wie beispielsweise einen DALI- oder DSI-Bus handeln.

Die verschiedenen Steuergeräte 11 werden auch als Aktuatoren bezeichnet und können mit verschiedenen Sensoren wie beispielsweise Bewegungs- oder Helligkeitssensoren aber auch durch einen Benutzer steuerbare Aktuatoren wie beispielsweise Schalter, Taster oder auch berührungsempfindliche Bildschirme mit einem Benutzerinterface zur Beleuchtungssteuerung verbunden sein.

Die Busleitung 21 ist vorzugsweise als zweidrahtige Datenleitung ausgebildet, die als Steuerbefehl ein Digitalsignal oder Analogsignal mit einer niedrigen Gleichspannung überträgt. Über die Busleitung 21 wird beispielweise eine Datenübertragung gemäß DALI Standard übertragen. Die Schnittstellenschaltung 4 und das Steuergerät 10 sind insbesondere in der Lage, Steuerbefehle gemäß dem DALI Standard zu empfangen.

Das Steuergerät 10 kann über die Busleitung 21 einzelne oder mehrere Betriebsgeräte 1 von Leuchtmitteln steuern, wobei es digitale oder analoge Steuerbefehle empfangen und auch aussenden kann.

Es wird somit ein Verfahren zur Steuerung eines Beleuchtungssystems A ermöglicht, aufweisend eine Busleitung 21, insbesondere einen analogen oder digitalen Lichtsteuerbus, an die wenigstens ein Betriebsgerät für Leuchtmittel und wenigstens ein Steuergerät 10 angeschlossen ist, wobei die Betriebsgeräte 1 über Steuerbefehle in der Helligkeit und / oder Farbe gesteuert werden und wobei das Steuergerät mit einem IPv6-Bussystem verbunden ist umfassend die folgenden Schritte:
- Empfang von IPv6-Busbefehlen über das IPv6-Bussystem,
- Umwandeln des empfangenen IPv6-Busbefehlen in dem Steuergerät 10,
- Senden eines Farbbefehls oder Helligkeitsbefehls als Steuerbefehl durch das Steuergerät 10 an zumindest ein Betriebsgerät 1,
- Anpassen der Ansteuerung des Leuchtmittels durch das Betriebsgerät 1 entsprechend des empfangenen Farbbefehls oder Helligkeitsbefehls.

Es erfolgt in dem Steuergerät 10 ein Umwandeln des empfangenen IPv6-Busbefehlen und in weiterer Folge ein Senden eines Farbbefehls oder Helligkeitsbefehls als Steuerbefehl durch das Steuergerät 10 an zumindest ein Betriebsgerät 1 aufgrund des zumindest einen umgewandelten IPv6-Busbefehls.

Das IPv6-Bussystem kann ein paketvermittelndes Netz für die Vermittlung von Datenpaketen bilden. Das IPv6-Bussystem kann für die Adressierung von Netzknoten und -stationen, sowie die Weiterleitung von Datenpaketen zwischen Teilnetzen zuständig sein. Das IPv6-Bussystem kann nach einem Schichtenmodell Steuerinformationen verschiedener Netzwerkprotokolle ineinander verschachtelt übertragen. Vorzugsweise enthalten die IPv6-Busbefehle, welche über das IPv6-Bussystem übertragen werden, die zu übertragenden Steuerbefehle eingehüllt in die Steuerinformationen verschiedener Netzwerkprotokolle übertragen werden.

Das Betriebsgerät kann beispielsweise mehrere unabhängig voneinander ansteuerbare Ausgangskanäle um Ansteuern von Leuchtmitteln unterschiedlicher Farbe oder Farbtemperatur aufweisen. Das Betriebsgerät kann die Ansteuerung der Ausgangskanäle entsprechend des empfangenen Farbbefehls anpassen.

Die Steuerbefehle können beispielsweise nach dem DALI Standard oder einem anderen digitalen Protokoll oder auch gemäß einem analogen Protokoll gesendet werden.

Es können weitere Steuergeräte 11 als Aktuatoren Steuerbefehle aussenden.

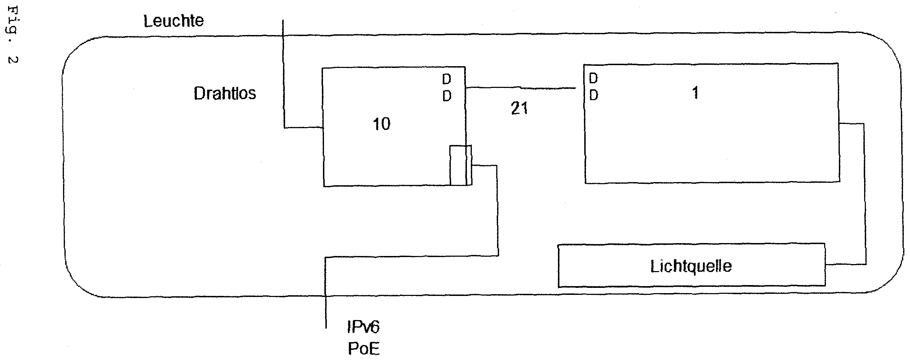

Fig. 2 zeigt beispielhaft Beleuchtungssystem A mit mindestens einem Betriebsgerät 1 zum Betreiben von Leuchtmitteln (Light Source), mit einem Steuergerät 10, wobei das Betriebsgerät 1 von dem Steuergerät 10 digitale Steuerbefehle empfängt. Die Betriebsgeräte 1 werden durch das Steuergerät 10 über Steuerbefehle in der Helligkeit und Farbe gesteuert.

Das Steuergerät ist mit einem IPv6-Bussystem verbunden. Das Steuergerät 10 ist zum Empfang von IPv6-Busbefehlen über das IPv6-Bussystem ausgelegt. Entsprechend der empfangenen IPv6-Busbefehle sendet das Steuergerät10 einen Farbbefehl oder einen Helligkeitsbefehl als Steuerbefehl an zumindest ein Betriebsgerät 1. Das Betriebsgerät 1 passt die Ansteuerung des Leuchtmittels entsprechend des empfangenen Farbbefehls oder Helligkeitsbefehls an. Die Steuerbefehle wie beispielsweise Farbbefehle oder Helligkeitsbefehle können verschachtelt innerhalb von IPv6-Busbefehle übertragen werden, wobei diese Steuerbefehle gemäß einem Schichtenmodell innerhalb der Steuerinformationen verschiedener Netzwerkprotokolle übertragen werden. Das Steuergerät kann die IPv6-Busbefehlen auswerten und die darin enthaltenen Steuerbefehle auslesen. Das Steuergerät kann somit die in den IPv6-Busbefehlen enthaltenen Steuerbefehle an Busleitung 21 weiterleiten.
Das Betriebsgerät kann optional mehrere unabhängig voneinander ansteuerbare Ausgangskanäle um Ansteuern von Leuchtmitteln unterschiedlicher Farbe oder Farbtemperatur aufweisen und das Betriebsgerät die Ansteuerung der Ausgangskanäle entsprechend des empfangenen Farbbefehls oder Helligkeitsbefehls anpassen.

Ein Sensor, beispielsweise ein Bewegungsmelder oder auch ein Außenlichtsensor kann an die Busleitung 21 angeschlossen sein. Ein Außenlichtsensor kann beispielsweise außerhalb eines mittels des Beleuchtungssystems zu beleuchtenden Gebäudes angeordnet sein. Der Außenlichtsensor 15 kann beispielsweise derart angeordnet sein, dass er nur das Licht außerhalb eines mittels des Beleuchtungssystems zu beleuchtenden Gebäudes erfasst. Beispielsweise kann er mit seinem Erfassungsbereich derart angeordnet sein, dass er durch ein Fenster nur das Außenlicht erfasst.

Der Außenlichtsensor kann beispielsweise einen RGBW Sensor wie z.B. der TCS3472 von TAOS aufweisen. Derartige Sensoren bieten die Möglichkeit, die Farbkanäle RGB und W (rot, grün, blau und weiß) einzeln auszuwerten. Auf diese Weise ist eine Erfassung und Auswertung der Farbe oder der Farbtemperatur des Außenlichts möglich.

Die Erfindung betrifft auch ein Steuergerät 10 zum Steuern von Betriebsgeräten 1 von Leuchtmitteln, welches analoge oder digitale Steuerbefehle an die Steuergeräte überträgt.
Die Betriebsgeräte 1 werden über Steuerbefehle in der Helligkeit und Farbe gesteuert, wobei das Steuergerät weiterhin mit einem IPv6-Bussystem verbunden ist. Das Steuergerät10 ist zum Empfang von IPv6-Busbefehlen über das IPv6-Bussystem ausgelegt ist und weiterhin dazu ausgelegt, entsprechend der empfangenen IPv6-Busbefehle einen Farbbefehl oder einen Helligkeitsbefehl als Steuerbefehl an zumindest ein Betriebsgerät zu senden. Das Betriebsgerät 1 ist dazu ausgelegt, die Ansteuerung des Leuchtmittels entsprechend des empfangenen Farbbefehls oder Helligkeitsbefehls anzupassen. Das Steuergerät 10 kann zum Empfang von IPv6-Busbefehlen über ein drahtloses und / oder drahtgebundenes IPv6-Bussystem ausgelegt sein. Das drahtlose IPv6-Bussystem kann beispielsweise eine WLAN-Datenverbindung sein. Das Steuergerät kann zum alternativen oder auch parallelen Anschluß an ein drahtloses und drahtgebundenes IPv6-Bussystem ausgelegt sein. Für die Anbindung an ein drahtloses IPv6-Bussystem kann das Steuergerät 10 eine Antenne aufweisen oder mit einer Antenne verbunden sein. Für die Anbindung an ein drahtgebundenes IPv6-Bussystem kann das Steuergerät 10 eine Buchse für eine Ethernet-Anbindung, beispielsweise eine CAT45-Buchse, aufweisen.

Das Steuergerät 10 ist zur Bereitstellung der Spannungsversorgung für den analogen oder digitalen Lichtsteuerbus, gespeist aus dem IPv6-Bussystem, ausgelegt sein. Eine Energieversorgung des Steuergerätes 10 und der Steuergeräte 11 kann somit ausgehend von dem IPv6-Bussystem aus erfolgen.

Beispielsweise ist in dem Steuergerät ein Niederspannungswandler, beispielsweise ein hochfrequent getakteter Gleichspannungswandler, angeordnet, der aus der an dem IPv6-Bussystem anliegenden Spannung eine Versorgungsspannung für die Speisung der Busleitung 21 bereitstellen. Dies kann beispielsweise bei DALI die Spannung von ca. 16 Volt für den Hochpegel sein. Das IPv6-Bussystem kann beispielsweise als PoE-Verbindung (Power over Ethernet) ausgelegt sein und somit können sowohl Daten als auch die Energie für die Energieversorgung der Busleitung über die Verbindung übertragen werden. Beispielsweise kann die Spannung des IPv6-Bussystems von 48V DC für den Hochpegel auf eine Spannung von 16V DC für den Hochpegel heruntergesetzt werden.

Das Steuergerät 10 kann dazu ausgelegt sein, die Belastung, insbesondere die Stromaufnahme, der Busleitung 21 zu erfassen. Beispielsweise kann das Steuergerät 10 kann dazu ausgelegt sein, dass es den in die Busleitung 21 gespeisten Strom direkt oder indirekt erfasst. In Kenntnis der Spannung auf der Busleitung 21, welche beispielsweise gemessen werden kann oder aufgrund einer Einstellung für den Niederspannungswandler bekannt sein kann, kann somit das Steuergerät 10 auf die Aktivität der an die Busleitung 21 angeschlossenen Betriebsgeräte 1 für Leuchtmittel sowie Steuergeräte 11 schließen. Typischerweise ziehen die Busleitung 21 angeschlossenen Betriebsgeräte 1 für Leuchtmittel sowie Steuergeräte 11 einen Versorgungsstrom zur Speisung ihrer internen Schnittstellenschaltung. Gemäß dem DALI Standard dürfen die Busleitung 21 angeschlossene Betriebsgeräte 1 für Leuchtmittel beispielsweise einen Strom von 2 mA ziehen. Oft schalten die Betriebsgeräte 1 ihre interne Schnittstellenschaltung ab, wenn die an die Betriebsgeräte 1 angeschlossenen Leuchtmittel ausgeschaltet und somit auch die Betriebsgeräte 1 deaktiviert werden.

In Kenntnis der Anzahl der angeschlossen Geräte an der Busleitung 21, also der Anzahl der Betriebsgeräte 1 für Leuchtmittel und optional Steuergeräte 11 kann somit das Steuergerät 10 durch die Überwachung Belastung der Busleitung 21 erfassen, wenn alle Betriebsgeräte 1 und / oder Steuergeräte 11 abgeschalten worden sind.

Alternativ oder zusätzlich kann das Steuergerät 10 auch die auf der Busleitung 21 übermittelten Steuerbefehle überwachen und auswerten. Anhand dieser Auswertung kann das Steuergerät 10 erkennen, wenn alle Betriebsgeräte 1 einen Ausschaltbefehl erhalten haben. Dies kann beispielsweise in einem Bürogebäude oder Einkaufszentrum in der Nacht der Fall sein.

Sofern das Steuergerät 10 erkennt, dass alle Betriebsgeräte 1 und / oder Steuergeräte 11 abgeschalten worden sind, kann es die Bereitstellung einer Versorgungsspannung für die Speisung der Busleitung 21 zumindest zeitweise beenden. Dabei kann auch eine Art Schlafmodus eingestellt werden, indem für längere Zeitphasen die Bereitstellung einer Versorgungsspannung für die Speisung der Busleitung 21 zumindest unterbrochen wird wobei regelmäßig, beispielsweise im Abstand von einigen Minuten, die Bereitstellung einer Versorgungsspannung für die Speisung der Busleitung 21 kurzzeitig aktiviert wird. In diesen Phasen der kurzzeitigen Aktivierung der Bereitstellung einer Versorgungsspannung für die Speisung der Busleitung 21 kann das Steuergerät 10 die angeschlossenen Betriebsgeräte 1 für Leuchtmittel und / oder Steuergeräte 11 abfragen, ob es eine Änderung gegeben hat und ob beispielsweise eine dauerhafte Aktivierung durch Wiedereinschalten der Leuchtmittel erforderlich ist.

Das Steuergerät 10 ist ausgelegt, im Falle eines Erkennens des Abschaltens aller an die Busleitung 21 angeschlossener Betriebsgeräte 1, beispielsweise aufgrund einer Überwachung der Steuerbefehle, die Betriebsgeräte 1 vom Netz zu trennen. Vorzugsweise ist in diesem Fall das Steuergerät 10 mit einem Relais ausgestattet oder mit einem Relais 5 verbunden, welches die Betriebsgeräte 1 beispielsweise über einen Schütz vom Netz trennen kann. In diesem Fall wird also die Netzspannungsversorgung der Betriebsgeräte 1 von beispielsweise 230V AC durch das Steuergerät 10 unterbrochen. Die Trennung und Ankopplung der Betriebsgeräte 1 von der Netzversorgung kann anstelle des Relais 5 beispielsweise auch mittels eines Halbleiterschalters erfolgen.

Die Trennung der Betriebsgeräte 1 vom Netz bei Erkennen eines Abschaltens der Leuchtmittel kann beispielsweise auch unter Beibehaltung der Speisung der Busleitung 21 durch das Steuergerät 10 erfolgen. In diesem Fall wäre es möglich, dass die Steuergeräte 11 und auch die Betriebsgeräte 1 zumindest soweit in Betrieb bleiben, dass sie eine Kommunikation auf der Busleitung 21 aufrechterhalten können, und gegebenenfalls einen Wiedereinschaltbefehl aussenden können. Im Falle eines Wiedereinschaltbefehls auf der Busleitung 21 oder auch auf IPv6-Bussystem könnte das Steuergerät 10 die Betriebsgeräte 1 wieder mit dem Netz verbinden (also ankoppeln) und in weiterer Folge könnten die Betriebsgeräte 1 wieder die Leuchtmittel ausgehend vom Netz speisen und betreiben.

Das Steuergerät 10 kann zum Empfang von Steuerbefehlen auf dem analogen oder digitalen Lichtsteuerbus ausgelegt sein und weiterhin zum Weiterleiten der auf dem Lichtsteuerbus empfangenen Steuerbefehle an das IPv6-Bussystem ausgelegt sein.

Ein Ausschaltbefehl kann beispielsweise ein Steuerbefehl zum Erreichen des Helligkeitswertes 0 sein, es kann aber auch ein Steuerbefehl zum Selektiven deaktivieren von einzelnen Betriebsgeräten 1 sein.

Die Energieversorgung des Steuergerätes 10 und der weiteren

Steuergeräte 11 kann alternativ über eine Busversorgung 12 erfolgen. Dabei kann die Busversorgung 12 die Busleitung 21 speisen, indem eine Übertragung nach dem sogenannten ,Active Low' Prinzip angewendet wird. Bei einer solchen Übertragung liegt dauerhaft ein Pegel von beispielsweise 12V oder 16V an, solange keine Daten übertragen werden. Im Fall einer Datenübertragung wird der Pegel zum Übertragen eines Bit auf einen Pegel unter beispielsweise 2V gezogen wird.
Auf diese Weise liegt eine dauerhafte Spannung auf der Busleitung 21 an und somit ist eine Versorgung der Steuergeräte 10 und 11 über die Busleitung 21 möglich. Alternativ kann das Steuergerät 10 über eine eigene Energieversorgung verfügen, die direkt an die Netzversorgung gekoppelt ist.

Das Steuergerät 10 kann den Zustand der Betriebsgeräte 1 über die Busleitung 21 abfragen. Weiterhin kann das Steuergerät 10 auch über direkt verbundene Taster oder Schalter, durch eine Schnittstelle zu einem Programmiergerät, durch einen Touchscreen oder andere Einstellmöglichkeiten auch direkt durch einen Benutzer konfiguriert und gesteuert werden. Durch die direkte Steuermöglichkeit kann der Benutzer auch Steuerbefehle wie beispielsweise Helligkeitswerte vorgeben.

Um eine einfache Installation des Steuergerätes 10 zu ermöglichen, kann das Steuergerät 10 in einem DIN Stromschienengehäuse untergebracht sein.

## Patentansprüche

1. Verfahren zur Steuerung eines Beleuchtungssystems (A) aufweisend eine Busleitung (21), insbesondere einen analogen oder digitalen Lichtsteuerbus, an die wenigstens ein Betriebsgerät (1) für Leuchtmittel und wenigstens ein Steuergerät (10) angeschlossen ist, wobei die Betriebsgeräte (1) über Steuerbefehle in der Helligkeit und / oder Farbe gesteuert werden und wobei das Steuergerät mit einem IPv6-Bussystem verbunden ist,
wobei das Steuergerät (10) eine Spannungsversorgung für den analogen oder digitalen Lichtsteuerbus (21) bereitstellt, gespeist aus dem IPv6-Bussystem, umfassend die folgenden Schritte:
- Empfang von IPv6-Busbefehlen über das IPv6-Bussystem,
- Umwandeln des empfangenen IPv6-Busbefehlen in dem Steuergerät (10),
- Senden eines Farbbefehls oder Helligkeitsbefehls als Steuerbefehl durch das Steuergerät (10) an zumindest ein Betriebsgerät (1),
- Anpassen der Ansteuerung des Leuchtmittels durch das Betriebsgerät (1) entsprechend des empfangenen Farbbefehls oder Helligkeitsbefehls,
**dadurch gekennzeichnet,**
**dass** das Steuergerät (10) bei Erkennen des Abschaltens aller an die Busleitung (21) angeschlossenen Betriebsgeräte (1) die Betriebsgeräte (1) vom Netz trennt.

2. Verfahren nach Anspruch 1,
wobei die Steuerbefehle verschachtelt innerhalb von IPv6-Busbefehlen übertragen werden.

3. Verfahren nach Anspruch 2,
wobei das Steuergerät die IPv6-Busbefehlen auswertet und die darin enthaltenen Steuerbefehle an Busleitung (21) weiterleitet.

4. Verfahren nach einem der Ansprüche 1 bis 3
- wobei das Betriebsgerät (1) mehrere unabhängig voneinander ansteuerbare Ausgangskanäle um Ansteuern von Leuchtmitteln unterschiedlicher Farbe oder Farbtemperatur aufweist und das Betriebsgerät (1) die Ansteuerung der Ausgangskanäle entsprechend des empfangenen Farbbefehls oder Helligkeitsbefehls anpasst.

5. Verfahren nach einem der Ansprüche 1 bis 4,
**dadurch gekennzeichnet**,
die Steuerbefehle nach dem DALI Standard gesendet werden.

6. Verfahren nach einem der Ansprüche 1 bis 5,
**dadurch gekennzeichnet,**
**dass** die IPv6-Busbefehlen über ein drahtgebundenes IPv6-Bussystem übertragen werden.

7. Steuergerät (10) zum Steuern von Betriebsgeräten (1) von Leuchtmitteln, welches zum Verbinden mit den Betriebsgeräten über einen analogen oder digitalen Lichtsteuerbus (21) mit dem ausgelegt ist und zum Senden von analogen oder digitalen Steuerbefehlen über den Lichtsteuerbus ausgelegt ist,
wobei das Steuergerät (10) dazu ausgelegt ist, die Betriebsgeräte (1) über Steuerbefehle in der Helligkeit und / oder Farbe zu steuern,
wobei das Steuergerät weiterhin mit einem IPv6-Bussystem verbindbar ist,
das Steuergerät(10) über das IPv6-Bussystem zum Empfang von IPv6-Busbefehlen ausgelegt ist und dazu ausgelegt ist, entsprechend der empfangenen IPv6-Busbefehle einen Farbbefehl oder einen Helligkeitsbefehl als Steuerbefehl an zumindest ein Betriebsgerät (1) zu senden, und das Steuergerät (10) zur Bereitstellung der Spannungsversorgung für den analogen oder digitalen Lichtsteuerbus (21), gespeist aus dem IPv6-Bussystem, ausgelegt ist,
**dadurch gekennzeichnet,**
**dass** das Steuergerät (10) dazu ausgelegt ist, bei Erkennen des Abschaltens aller an die Busleitung (21) angeschlossenen Betriebsgeräte (1) die Betriebsgeräte (1) vom Netz zu trennen.

8. Steuergerät (10) nach Anspruch 7, **dadurch gekennzeichnet,**
**dass** das Steuergerät (10) zum Empfang von IPv6-Busbefehlen über ein drahtgebundenes IPv6-Bussystem ausgelegt ist.

9. Steuergerät (10) nach einem der Ansprüche 7 bis 8, **dadurch gekennzeichnet,**
**dass** die Steuerbefehle verschachtelt innerhalb von IPv6-Busbefehlen übertragen werden.

10. Steuergerät (10) nach einem der Ansprüche 7 bis 9, **dadurch gekennzeichnet,**
**dass** das Steuergerät zur Auswertung der IPv6-Busbefehlen und zur Weiterleitung der in den IPv6-Busbefehlen enthaltenen Steuerbefehle an die Busleitung (21) ausgelegt ist.

11. Steuergerät (10) nach Anspruch 7, **dadurch gekennzeichnet,**
**dass** das Steuergerät (10) zur Unterbrechung der Bereitstellung der Spannungsversorgung für den analogen oder digitalen Lichtsteuerbus (21) ausgelegt ist.

12. Steuergerät (10) nach einem der Ansprüche 7 bis 11, **dadurch gekennzeichnet,**
**dass** das Steuergerät (10) zum Empfang von Steuerbefehlen auf dem analogen oder digitalen Lichtsteuerbus (21) ausgelegt ist und weiterhin zum Weiterleiten der auf dem Lichtsteuerbus empfangenen Steuerbefehle an das IPv6-Bussystem ausgelegt ist.

13. Beleuchtungssystem (A) mit mindestens einem Betriebsgerät (1) zum Betreiben von Leuchtmitteln, und mit einem Steuergerät (10) gemäß einem der Ansprüche 7 bis 12,
wobei das Steuergerät (10) über einen analogen oder digitalen Lichtsteuerbus (21) mit dem Betriebsgerät (1) verbunden ist, und wobei das Betriebsgerät (1) dazu ausgelegt ist, die Ansteuerung des Leuchtmittels entsprechend des empfangenen Farbbefehls oder Helligkeitsbefehls anzupassen.

## Claims

1. A method for controlling an lighting system (A) having a bus line (21), in particular an analogue or digital light control bus, to which at least one operating device (1) for lighting means and at least one control device (10) is connected, wherein the operating devices (1) are controlled via control commands in terms of brightness and/or color and wherein the control device is connected to an IPv6 bus system,
wherein the control device (10) provides a voltage supply for the analogue or digital light control bus (21), supplied from the IPv6 bus system, comprising the following steps:
- receiving IPv6 bus commands via the IPv6 bus system,
- converting the received IPv6 bus commands in the control device (10),
- transmitting a color command or brightness command as a control command via the control device (10) to at least one operating device (1),
- adapting the control of the lighting means via the operating device (1) according to the received color command or brightness command,
**characterized in**
**that** the control device (10) upon detection of the disconnection of all operating devices (1) connected to the bus line (21) disconnects the operating devices (1) from the network.

2. The method according to Claim 1,
wherein the control commands are transmitted interleaved within IPv6 bus commands.

3. The method according to Claim 2,
wherein the control device evaluates the IPv6 bus commands and forwards the control commands contained therein to bus line (21).

4. The method according to any one of Claims 1 to 3
- wherein the operating device (1) has a plurality of output channels controllable independently of one another for controlling lighting means of different color or color temperature and the operating device (1) adapts the control of the output channels according to the received color command or brightness command.

5. The method according to any one of Claims 1 to 4,
**characterized in**
**that** the control commands are transmitted according to the DALI standard.

6. The method according to any one of Claims 1 to 5,
**characterized in**
**that** the IPv6 bus commands are transmitted via a wired IPv6 bus system.

7. A control device (10) for control of operating devices (1) of lighting means, which are designed for connecting with the operating devices via an analogue or digital light control bus (21) and is designed for transmitting analogue or digital control commands via the light control bus,
wherein the control device (10) is designed to control the operating devices (1) via control commands in terms of brightness and/or color,
wherein the control device can furthermore be connected to an IPv6 bus system,
the control device (10) is designed to receive IPv6 bus commands via the IPv6 bus system and is designed to transmit a color command or a brightness command as a control command to at least one operating device (1) according to the received IPv6 bus commands,
and the control device (10) is designed to provide voltage supply for the analogue or digital light control bus (21), supplied from the IPv6 bus system,
**characterized in**
**that** the control device (10) is designed to disconnect the operating devices (1) from the network upon detection of the disconnection of all operating devices (1) connected to the bus line (21).

8. The control device (10) according to Claim 7, **characterized in**
**that** the control device (10) is designed to receive IPv6 bus commands via a wired IPv6 bus system.

9. The control device (10) according to any one of Claims 7 to 8, **characterized in that** the control commands are transmitted interleaved within IPv6 bus commands.

10. The control device (10) according to any one of Claims 7 to 9, **characterized in that** the control device is designed for evaluating the IPv6 bus commands and for forwarding the control commands contained in the IPv6 bus commands to the bus line (21).

11. The control device (10) according to Claim 7, **characterized in**
**that** the control device (10) is designed for interrupting the provision of the voltage supply for the analogue or digital light control bus (21).

12. The control device (10) according to any one of Claims 7 to 11, **characterized in that** the control device (10) is designed for receiving control commands on the analogue or digital light control bus (21) and furthermore is designed for forwarding the control commands received on the light control bus to the IPv6 bus system.

13. A lighting system (A) with at least one operating device (1) for operating lighting means, and with a control device (10) according to any one of Claims 7 to 12, wherein the control device (10) is connected via an analogue or digital light control bus (21) to the operating device (1), and wherein the operating device (1) is designed to adapt the control of the lighting means according to the received color command or brightness command.

## Revendications

1. Procédé de contrôle d'un système d'éclairage (A) comprenant une ligne de bus (21), plus particulièrement un bus de contrôle d'éclairage analogique ou numérique auquel sont raccordés au moins un appareil de commande (1) pour moyen d'éclairage et au moins un appareil de contrôle (10), les appareils de commande (1) étant contrôlés par l'intermédiaire d'instructions de contrôle concernant la luminosité et/ou la couleur et l'appareil de contrôle étant relié avec un système de bus IPv6,
l'appareil de contrôle (10) mettant à disposition une alimentation en tension pour le bus de contrôle d'éclairage analogique ou numérique (21), alimentée à partir du système de bus IPv6, comprenant les étapes suivantes :
- réception d'instructions de bus IPv6 par l'intermédiaire du système de bus IPv6,
- conversion des instructions de bus IPv6 reçues dans l'appareil de contrôle (10),
- envoi d'une instruction de couleur ou d'une instruction de luminosité en tant qu'instruction de contrôle par l'appareil de contrôle (10) à au moins un appareil de commande (1),
- ajustement du contrôle du moyen d'éclairage par l'appareil de commande (1) en fonction de l'instruction de couleur ou de l'instruction de luminosité reçue, **caractérisé en ce que**
l'appareil de contrôle (10) déconnecte les appareils de commande (1) du secteur lors de la détection de l'arrêt de tous les appareils de commande (1) raccordés à la ligne de bus (21).

2. Procédé selon la revendication 1,
les instructions de contrôle étant transmises de manière imbriquée à l'intérieur d'instructions de bus IPv6.

3. Procédé selon la revendication 2,
l'appareil de contrôle analysant les instructions de bus IPv6 et transmettant les instructions de bus contenues dans celles-ci à la ligne de bus (21).

4. Procédé selon l'une des revendications 1 à 3,
- l'appareil de commande (1) comprenant plusieurs canaux de sortie contrôlables indépendamment les uns des autres pour le contrôle de moyens d'éclairage de différentes couleurs ou températures de couleur et l'appareil de commande (1) ajustant le contrôle des canaux de sortie en fonction de l'instruction de couleur ou de l'instruction de luminosité reçue.

5. Procédé selon l'une des revendications 1 à 4,
**caractérisé en ce que**
les instructions de contrôle sont envoyées selon le standard DALI.

6. Procédé selon l'une des revendications 1 à 5,
**caractérisé en ce que**
les instructions de bus IPv6 sont transmises par l'intermédiaire d'un système de bus IPv6.

7. Appareil de contrôle (10) pour le contrôle d'appareils de commande (1) de moyens d'éclairage, qui est conçu pour être relié avec les appareils de commande par l'intermédiaire d'un bus de contrôle d'éclairage analogique ou numérique (21) et pour l'envoi d'instructions de contrôle analogiques ou numériques par l'intermédiaire du bus de contrôle d'éclairage,
l'appareil de contrôle (10) étant conçu pour contrôler les appareils de commande (1) par l'intermédiaire d'instructions de contrôle concernant la luminosité et/ou la couleur,
l'appareil de contrôle pouvant en outre être relié à un système de bus IPv6,
l'appareil de contrôle (10) étant conçu pour la réception, par l'intermédiaire du système de bus IPv6, d'instructions de bus IPv6 et conçu pour envoyer, en fonction des instructions de bus IPv6 reçues, une instruction de couleur ou une instruction de luminosité en tant qu'instruction de contrôle à au moins un appareil de commande (1),
et l'appareil de contrôle (10) étant conçu pour la mise à disposition de l'alimentation en tension pour le bus de contrôle d'éclairage analogique ou numérique (21), alimentée à partir du système de bus IPv6,
**caractérisé en ce que**
l'appareil de commande (10) est conçu pour déconnecter les appareils de commande (1) du secteur lors de la détection de l'arrêt de tous les appareils de commande (1) raccordés à la ligne de bus (21).

8. Appareil de contrôle (10) selon la revendication 7, **caractérisé en ce que**
l'appareil de contrôle (10) est conçu pour la réception d'instructions de bus IPv6 par l'intermédiaire d'un système de bus IPv6 filaire.

9. Appareil de contrôle (10) selon l'une des revendications 7 à 8, **caractérisé en ce que**
les instructions de contrôle sont transmises de manière imbriquée à l'intérieur d'instructions de bus IPv6.

10. Appareil de contrôle (10) selon l'une des revendications 7 à 9, **caractérisé en ce que**
l'appareil de contrôle est conçu pour l'analyse des instructions de bus IPv6 et pour la transmission des instructions de contrôle contenues dans les instructions de bus IPv6 à la ligne de bus (21).

11. Appareil de contrôle (10) selon la revendication 7, **caractérisé en ce que**
l'appareil de contrôle (10) est conçu pour interrompre la mise à disposition de l'alimentation en tension pour le bus de contrôle d'éclairage analogique ou numérique (21).

12. Appareil de contrôle (10) selon l'une des revendications 7 à 11, **caractérisé en ce que**
l'appareil de contrôle (10) est conçu pour la réception d'instructions de contrôle sur le bus de contrôle d'éclairage analogique ou numérique (21) et en outre pour la transmission des instructions de contrôle reçues sur le bus de contrôle d'éclairage au système de bus IPv6.

13. Système d'éclairage (A) avec au moins un appareil de commande (1) pour la commande de moyens d'éclairage et avec un appareil de contrôle (10) selon l'une des revendications 7 à 12, l'appareil de commande (10) étant relié par l'intermédiaire d'un bus de contrôle d'éclairage analogique ou numérique (21), avec l'appareil de commande (1) et l'appareil de contrôle (1) étant conçu pour ajuster le contrôle du moyen d'éclairage en fonction de l'instruction de couleur ou de l'instruction de luminosité reçue.
